# EUROPÄISCHE PATENTSCHRIFT

(11) **EP 3 678 528 B1**
(45) Veröffentlichungstag und Bekanntmachung des Hinweises auf die Patenterteilung: **06.10.2021**
(21) Anmeldenummer: 18780223.6
(22) Anmeldetag: 31.08.2018
(51) Int. Cl.: A47L 15/00, A47L 15/42

(54) **MITTEL ZUM VERHINDERN DES ZUSETZENS EINES PLATTENKONDENSORS EINER HAUSHALTSGESCHIRRSPÜLMASCHINE**
MEANS FOR PREVENTING THE CLOGGING OF A PLATE CONDENSER OF A DOMESTIC DISHWASHER
MOYEN POUR EMPÊCHER L'ENCRASSEMENT D'UN CONDENSEUR À PLAQUES D'UN LAVE-VAISSELLE MÉNAGER

(30) Priorität: 08.09.2017 ES 201731098
(43) Veröffentlichungstag der Anmeldung: 15.07.2020
(73) Patentinhaber: BSH Hausgeräte GmbH, 81739 München (DE)
(72) Erfinder: ARANDIGOYEN MARTÍNEZ, Naiara, 31005 Pamplona (ES); CASADO CARLINO, Sergio, 31621 Sarriguren (ES); CASTILLO BERGAD, Esther, 50018 Zaragoza (ES); MERINO ALCAIDE, Eloy, 31621 Sarriguren (ES); MOLINER MURILLO, Gustavo, 31200 Estella (Navarra) (ES); SADABA CHALEZQUER, Jose Maria, 31008 Pamplona (ES); SAGÜES GARCÍA, Xabier, 31001 Pamplona (ES); URDIAIN YOLDI, Koldo, 31240 Ayegui (ES); VEREDA ORTIZ, Ciro Sebastián, 31014 Pamplona (ES)
(86) Internationale Anmeldenummer: PCT/IB2018/056671
(87) Internationale Veröffentlichungsnummer: WO 2019/049007

(56) Entgegenhaltungen:
- EP-A2- 2 105 081
- EP-A2- 2 449 945
- WO-A1-98/01688
- WO-A1-2007/146656
- WO-A1-2015/155643
- DE-A1- 19 505 641
- DE-A1-102014 219 457
- DE-U1- 9 204 952

## Beschreibung

Die Erfindung betrifft eine Haushaltsgeschirrspülmaschine mit einem Aufnahmeraum zur Aufnahme von Spülgut, mit einem Pumpensumpf, mit einer Wärmepumpenanordnung, die bei ihrem Betrieb von einem Wärmeträger durchströmt wird, wobei die Wärmepumpenanordnung unter anderem einen Verflüssiger in Form eines Plattenkondensors umfasst, mit dessen Hilfe Wärme vom Wärmeträger auf eine in der Haushaltsgeschirrspülmaschine zirkulierende Spülflotte übertragbar ist, und mit wenigstens einer Sprühanordnung, mit deren Hilfe Spülflotte auf das Spülgut aufbringbar ist, wobei die Haushaltsgeschirrspülmaschine einen ersten Strömungsweg für die Spülflotte aufweist, der sich vom Pumpensumpf zur Sprühanordnung erstreckt, und wobei die Haushaltsgeschirrspülmaschine insbesondere einen zweiten Strömungsweg aufweist, der sich vom Pumpensumpf zum Plattenkondensor erstreckt.

Ferner wird ein Verfahren zum Betreiben einer Haushaltsgeschirrspülmaschine mit einem Aufnahmeraum zur Aufnahme von Spülgut, mit einem Pumpensumpf und mit einer Wärmepumpenanordnung beschrieben, die bei ihrem Betrieb von einem Wärmeträger durchströmt wird, wobei die Wärmepumpenanordnung unter anderem einen Verflüssiger in Form eines Plattenkondensors umfasst, mit dessen Hilfe beim Betrieb der Wärmepumpenanordnung Wärme vom Wärmeträger auf eine in der Haushaltsgeschirrspülmaschine zirkulierende Spülflotte übertragen wird und mit wenigstens einer Sprühanordnung, mit deren Hilfe Spülflotte während eines Spülprogramms auf das Spülgut aufgebracht wird.

Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte eines Spülprogramms wird das Spülgut mit Spülflotte bzw. Spülflüssigkeit (insbesondere Wasser oder Wasser mit Reinigungs- und/oder Klarspülmittel) beaufschlagt, um Verunreinigungen vom Spülgut zu lösen. Zum Trocknen des Spülguts weisen entsprechende Haushaltsgeschirrspülmaschinen ein Trocknungssystem für das gereinigte Spülgut auf, bei dem Luft das Wasser, das an dem gereinigten Spülgut haftet, aufnimmt und das Spülgut hierdurch trocknet. Die feuchte Luft wird anschließend nach außen geleitet oder an einer kalten Fläche vorbeigeführt, um Wasserdampf zu kondensieren.

Die Haushaltsgeschirrspülmaschine gemäß der vorliegenden Erfindung weist ferner eine nachfolgend beschriebene Wärmepumpenanordnung auf. Die Wärmepumpenanordnung umfasst prinzipiell einen als Verdampfer wirkenden Wärmetauscher zum Verdampfen eines Wärmeträgers und einen Verdichter zum Verdichten des verdampften Wärmeträgers. Mit Hilfe des Verdichters wird der in den Verdichter beim Betrieb der Wärmepumpenanordnung eintretende gasförmige Wärmeträger komprimiert, wobei er sich erwärmt.

Ferner umfasst die Wärmepumpenanordnung einen als Verflüssiger (andere Bezeichnung: Kondensor) wirkenden Wärmetauscher, in dem der erwärmte gasförmige Wärmeträger wieder kondensiert und hierbei Wärme abgibt, die beispielsweise für die Erwärmung von in der Haushaltsgeschirrspülmaschine vorhandener Spülflotte bzw. Spülflüssigkeit genutzt werden kann. Anschließend wird der verflüssigte Wärmeträger mit Hilfe eines Expansionsorgans (in der Regel eines Drosselventils oder eines Kapillarröhrchens) entspannt und gelangt schließlich wieder zurück zum Verdampfer, in dem er unter Wärmeaufnahme wieder in den gasförmigen Zustand übergeht, um dann erneut dem Verdichter zugeführt zu werden.

Der als Verdampfer wirkende Wärmetauscher kann beispielsweise als Rohrschlange oder auch als flächig ausgebildeter Wärmetauscher (sogenannter Plattenwärmetauscher) vorliegen. In jedem Fall sind ein Einlass und ein Auslass für den Wärmeträger vorhanden. Letzteres gilt auch für den als Verflüssiger wirkenden Wärmetauscher, wobei dieser im Rahmen der vorliegenden Erfindung als Plattenwärmetauscher, nachfolgend als Plattenkondensor, ausgebildet ist.

Plattenkondensoren umfassen in der Regel mehrere parallel zueinander angeordnete, insbesondere weitgehend plane oder mit Prägungen versehene, Platten aus Metall oder einem wärmeleitenden Kunststoff. Die Platten sind jeweils über Verbindungsabschnitte miteinander verbunden und bilden damit Strömungskanäle bzw. einen Hohlraum für die Spülflotte und den Wärmeträger, wobei beide Medien durch die Platten voneinander getrennt geführt werden. Der Wärmeaustausch zwischen den Medien erfolgt schließlich über Wärmeleitung über die einzelnen Platten. Vorzugsweise wechselt sich jeweils ein zwischen einer ersten Platte und einer von dieser beabstandeten, benachbarten, zweiten Platte vorhandener Hohlraum, der für den Durchfluss von zu erwärmender Spülflotte vorgesehen ist, mit einem Hohlraum zwischen der zweiten Platte und einer von dieser beabstandeten, dritten Platte ab, welcher zum Durchfluss des Wärmeträgers vorgesehen ist. Die Platten können vorzugsweise zu einem geradlinigen Stapel hintereinander oder übereinander zusammengesetzt sein. Alternativ können die übereinander oder hintereinander gestapelten Platten eines Plattenkondensors spiralförmig angeordnet, insbesondere gewickelt, sein, so dass ein Spiralkondensor bereitgestellt ist.

Der als Verflüssiger dienende Wärmetauscher besitzt also einen Spülflotteneinlass und einen Spülflottenauslass, so dass die zu erwärmende Spülflotte an den der Spülflotte zugewandten Oberflächen des Plattenkondensors vorbeigeführt werden kann.

Problematisch ist bei den bekannten Plattenkondensoren, dass die Spülflotte in der Regel Verunreinigungen mit sich führt, die von dem zu reinigenden Spülgut stammen. Diese Verunreinigungen können an den genannten Oberflächen des Plattenkondensors anhaften oder sich an den genannten Verbindungsbereichen festsetzen. Hierdurch kommt es zu einem reduzierten Wärmeübergang zwischen Spülflotte und Wärmeträger, so dass der Wirkungsgrad des Plattenkondensors und damit der Wärmepumpenanordnung sinkt.

Die Haushaltsgeschirrspülmaschine der WO 2015/155643 A1 weist eine Wärmepumpenanordnung mit einem Plattenkondensor auf. Es ist ein erster Strömungsweg für Spülflotte vorgesehen, der sich vom Sumpf über eine Versorgungsleitung zu einer Umwälzpumpe und über eine dieser nachgeordneten Wasserweiche "diverter" über Versorgungsleitungen zu einer oberen Sprühvorrichtung "sprinkler" und zu einer unteren Sprühvorrichtung "sprinkler" erstreckt. Vom "diverter" zweigt eine Versorgungsleitung zum Plattenkondensor ab.

Dessen Ausgang ist über eine Verbindungsleitung mit dem Sumpf verbunden Der Sumpf ist lediglich mit einem konventionellen Filtersystem versehen.

Der Geschirrspüler der EP 2 449 945 A2 umfasst eine Wärmepumpe. Der Kondensator der Wärmepumpe ist am Zirkulationsleitungssystem zwischen der Zirkulationspumpe und dem Bottich der Geschirrspülmaschine angeordnet, in dem das Spülgut untergebracht ist. Vorzugsweise befindet sich der Kondensator an einer Bypassleitung, die von einer unteren Verbindungsleitung in den Sumpf abzweigt, die von einem der Zirkulationspumpe nachgeordneten Umschaltventil zum Sumpf führt. Für die Bypassleitung ist in der unteren Verbindungsleitung eine Abzweigung mit integriertem Sieb vorgesehen.

Aufgabe der vorliegenden Erfindung ist es, eine Haushaltsgeschirrspülmaschine mit Wärmepumpenanordnung sowie ein Verfahren zum Betreiben einer solchen weiterzubilden.

Die Aufgabe wird gelöst durch eine Haushaltsgeschirrspülmaschine und ein Verfahren mit den Merkmalen der unabhängigen Patentansprüche.

Erfindungsgemäß ist vorgesehen, dass die Haushaltsgeschirrspülmaschine zumindest ein Mittel aufweist, das ausgebildet ist, ein Festsetzen von Verunreinigungen, die von der Spülflotte mitgeführt werden, an einer der Spülflotte zugewandten Oberfläche des Plattenkondensors zu verhindern oder zu erschweren.

Gemäß der Erfindung wird also sichergestellt, dass die der Spülflotte zugewandten Oberflächen des Plattenkondensors nur minimal oder überhaupt nicht mit den Verunreinigungen der Spülflotte verschmutzt werden, wobei hierzu auch Fette gehören, die in der Spülflotte mitgeführt werden. Die Oberflächen weisen daher stets eine unverschmutzte Oberfläche auf.

Gemäß einer vorteilhaften Ausbildung weist die erfindungsgemäße Haushaltsgeschirrspülmaschine zumindest ein Mittel auf, das ausgebildet ist, an einer der Spülflotte zugewandten Oberfläche des Plattenkondensors festgesetzte Verunreinigungen von der Oberfläche zu lösen bzw. die Oberfläche regelmäßig von anhaftenden Verunreinigungen zu befreien.

Gemäß einer vorteilhaften Weiterbildung ist dieses Mittel als die Spülflotte förderndes Fördermittel, vorzugsweise als Pumpe, ausgebildet, mit dessen Hilfe die Strömungsgeschwindigkeit der durch den Plattenkondensor strömenden Spülflotte bzw. Spülflüssigkeit zeitweise erhöht oder erniedrigt werden kann.

Es ist also denkbar, dass die Spülflotte während des längsten Zeitraums des Betriebs der Wärmepumpenanordnung mit einem Volumenstrom von dem Fördermittel durch den Plattenkondensor gefördert wird, der zwischen definierten Grenzen liegt. Darüber hinaus sind Zeiträume vorgesehen, während denen die Strömungsgeschwindigkeit und damit der Volumenstrom gegenüber diesen Grenzen erhöht oder erniedrigt wird. Hierdurch kommt es zu Strömungsänderungen innerhalb des Plattenkondensors, die ein Ablösen von im Inneren des Plattenkondensors festgesetzten Verunreinigung bewirken. Das Ablösen kann entweder durch eine besonders hohe Strömungsgeschwindigkeit erreicht werden, da hierdurch anhaftende Verunreinigungen mitgerissen werden. Auch eine verringerte Strömungsgeschwindigkeit kann hilfreich sein, wenn hierdurch die Strömungscharakteristik innerhalb des Plattenkondensors derart geändert wird, dass an den Verbindungsbereichen anliegende Verunreinigungen, wie beispielsweise längliche Verschmutzungen (Haare, Nudeln, etc.), in eine andere Richtung bewegt werden und sich hierdurch lösen.

Ebenso ist es von Vorteil, wenn das Fördermittel ausgelegt ist, die Strömungsrichtung der durch den Plattenkondensor strömenden Spülflotte zu verändern, vorzugsweise umzukehren. Die Spülflotte strömt also vorzugsweise während eines Teils des Betriebs der Wärmepumpenanordnung in einer ersten Richtung durch den Plattenkondensor (Spülflotteneinlass -> Spülflottenauslass). Ebenso gibt es zeitliche Abschnitte während des Betriebs der Wärmepumpenanordnung, während derer die Spülflotte über den eigentlichen Spülflottenauslass in den Plattenkondensor und vor dort über den eigentlichen Spülflotteneinlass wieder aus dem Plattenkondensor ausströmt. Insbesondere Verzopfungen innerhalb des Plattenkondensors lassen sich hierdurch einfach aus dem Plattenkondensor entfernen.

Das Fördermittel kann pulsartig betrieben werden, so dass innerhalb des Plattenkondensors Turbulenzen entstehen, die ein Lösen von Verunreinigungen bewirken. Auch kann die Strömungsrichtung der Spülflotte mehrmals pro Minute oder mehrmals pro zehn Sekunden geändert werden, um eine besonders starke Turbulenz zu erzeugen.

Nach einer vorteilhaften Weiterbildung ist das Fördermittel in den zweiten Strömungsweg integriert. Beispielsweise kann also vorgesehen sein, dass dem ersten Strömungsweg der

Spülflotte, der sich vom Pumpensumpf zur Sprühanordnung erstreckt, eine erste Fördereinrichtung zugeordnet ist, mit deren Hilfe Spülflotte entlang des ersten Strömungswegs förderbar ist, und dass dem zweiten Strömungsweg, der sich vom Pumpensumpf zum Plattenkondensor erstreckt, das oben genannte Fördermittel zugeordnet ist, mit dessen Hilfe die Spülflotte entlang des zweiten Strömungswegs und durch den Plattenkondensor förderbar ist.

Der erste Strömungsweg sowie der zweite Strömungsweg sind vorzugsweise voneinander getrennte bzw. separierte Flüssigkeitswege.

Der jeweilige Strömungsweg wird jeweils vorzugsweise durch einen oder mehrere Leitungsabschnitte (z. B. Rohrleitungen) oder Kanalabschnitte gebildet.

Die Sprühanordnung umfasst vorzugsweise einen oder mehrere rotierende Sprüharme, wie sie aus dem Stand der Technik bekannt sind. Auch kann die Sprühanordnung einen Spülflottenverteiler im Bereich der Deckenwandung der Haushaltsgeschirrspülmaschine umfassen.

Beim genannten Pumpensumpf handelt es sich um eine Vertiefung in der den Aufnahmeraum nach unten hin begrenzenden Bodenwandung, in der sich die Spülflotte immer wieder sammelt, um von der Fördereinrichtung und/oder dem Fördermittel in Richtung der Sprühanordnung und/oder des Verflüssigers gepumpt zu werden oder um die Haushaltsgeschirrspülmaschine über einen Ablauf zu verlassen.

Bei der Fördereinrichtung und dem Fördermittel handelt es sich vorzugsweise jeweils um eine Flüssigkeitspumpe, deren Drehzahl bzw. Förderleistung vorzugsweise (z. B. mit Hilfe einer Steuer- und/oder Regelungseinheit der Haushaltsgeschirrspülmaschine) änderbar, insbesondere regelbar, ist.

Nach einer vorteilhaften Weiterbildung ist das erfindungsgemäße Mittel als Bypass ausgebildet, mit dessen Hilfe sich der Strömungsweg der in den Plattenkondensor einströmenden Spülflotte ändern lässt. Beispielsweise wäre es denkbar, dass eine erste Spülflottenleitung vom Pumpensumpf zum Plattenkondensor führt, über den die Spülflotte über einen Spülflotteneinlass in den Plattenkondensor strömt. Von dort führt eine zweite Spülflottenleitung von einem Spülflottenauslass des Plattenkondensors zum Pumpensumpf zurück oder zu einem Auslass für die Spülflotte im Bereich einer der Seitenwandungen des Spülbehälters der Haushaltsgeschirrspülmaschine. Darüber hinaus kann ein Bypass in Form einer dritten Spülflottenleitung vorhanden sein, über den die Spülflotte ausgehend vom Pumpensumpf über den obigen Spülflottenauslass in den Plattenkondensor und über den oben genannten Spülflotteneinlass aus dem Plattenkondensor strömen kann. Mit dem Bypass stehen vorzugsweise ein oder mehrere Ventile in Verbindung, über das oder die bestimmt werden kann, ob die Spülflotte über den Spülflotteneinlass oder den Spülflottenauslass in den Plattenkondensor strömt. Hierdurch kann die Strömungsrichtung der Spülflotte innerhalb des Plattenkondensors geändert werden, so dass ein Anhaften von Verunreinigungen innerhalb des Plattenkondensors erschwert oder verhindert werden kann bzw. festgesetzte Verunreinigungen gelöst werden können.

Gemäß einer weiteren vorteilhaften Weiterbildung ist das Mittel als Heizeinrichtung ausgebildet, mit deren Hilfe sich die in den Plattenkondensor einströmende Spülflotte vor dem Eintreten in den Plattenkondensor oder innerhalb des Plattenkondensors auf eine Mindesttemperatur von wenigstens 60° C erwärmen lässt. Hierdurch weist die Spülflotte eine Temperatur auf, die ein Anhaften von Fetten innerhalb des Plattenkondensors erschwert bzw. verhindert bzw. die ausreicht, bereits anhaftende Fette aus der Spülflotte wieder zu lösen. Die Temperatur kann hierbei während ausgewählter Abschnitte des jeweiligen Spülprogramms ein- oder mehrmals erhöht werden. Während des restlichen Zeitraums ist eine Temperatur ausreichend, die den gewünschten Reinigungseffekt auf das innerhalb des Aufnahmeraums befindliche Spülgut ausübt. Insbesondere ist die Heizeinrichtung also ausgelegt, die Spülflotte auf unterschiedliche Temperaturen zu erwärmen.

Nach einer weiteren vorteilhaften Weiterbildung ist die Heizeinrichtung als elektrische Heizung ausgebildet. Die Heizung kann einer Spülflottenleitung zugeordnet sein, die sich vom Pumpensumpf zum Plattenkondensor erstreckt, so dass die Spülflotte auf ihrem Weg in den Plattenkondensor erwärmt wird. Beispielsweise könnte die Heizung die genannte Spülflottenleitung in einem gewissen Bereich ummanteln oder anderweitig mit dieser in wärmeleitendem Kontakt stehen. Denkbar ist auch, dass die Heizung den Plattenkondensor ganz oder teilweise ummantelt bzw. mit diesem in wärmeleitendem Kontakt steht. In diesem Fall würden die Platten des Plattenkondensors und damit auch die darin strömende Spülflotte erwärmt. Denkbar ist auch, dass das die Spülflotte durch den Plattenkondensor fördernde Fördermittel während des Betriebs der Heizung langsamer oder überhaupt nicht betrieben wird, um die Spülflotte auch bei geringer Heizleistung der Heizung ausreichend erwärmen zu können.

Nach einer vorteilhaften Weiterbildung ist die Heizeinrichtung durch den Plattenkondensor selbst gebildet. Mit anderen Worten ist es also möglich, die Wärmepumpenanordnung während ausgewählter Abschnitte eines Spülprogramms derart zu betreiben, dass der Plattenkondensor eine Wärme an die Spülflotte abgibt, die ausreicht, um diese auf die oben genannte Mindesttemperatur zu erwärmen.

Gemäß der Erfindung ist das Mittel als Filteranordnung ausgebildet. Diese Filteranordnung ist in Strömungsrichtung betrachtet vor dem Plattenkondensor vorgesehen. Die Filteranordnung ist im Strömungsweg vor dem Plattenkondensor vorgesehen, vorzugsweise in die Spülflottenleitung integriert bzw. eingefügt, und verhindert, dass Verunreinigungen ab einer bestimmten Größe in den Plattenkondensor gelangen. Vorzugsweise ist die Filteranordnung vom Bediener der Haushaltsgeschirrspülmaschine entnehmbar und kann damit problemlos gereinigt werden. Vorzugsweise kann die Entnahme ohne den Einsatz eines Werkzeugs erfolgen. Die Filteranordnung kann beispielsweise über ein leichtgängiges Gewinde oder eine Klips- oder Schnappverbindung in der Haushaltsgeschirrspülmaschine befestigt sein.

Nach einer weiteren vorteilhaften Weiterbildung ist die Filteranordnung in den zweiten Strömungsweg integriert, der sich vom Pumpensumpf zum Plattenkondensor erstreckt. Generell ist es von Vorteil, wenn im Bereich des Pumpensumpfs ein Grobfilter und/oder ein Feinfilter angeordnet ist, der Verunreinigungen zurückhält, bevor die Spülflotte vom Pumpensumpf über den ersten Strömungsweg zur Sprühanordnung und/oder über den zweiten Strömungsweg zum Plattenkondensor gelangt. Vorteilhaft ist es insbesondere, wenn zusätzlich oder unabhängig hiervon ein Filter in Form der genannten Filteranordnung vorgesehen ist, der in den genannten zweiten Strömungsweg integriert ist. Mit anderen Worten dient diese Filteranordnung also ausschließlich dem Filtern der Spülflotte, die vom Pumpensumpf zum Plattenkondensor gefördert wird, während die Spülflotte auf ihrem direkten Weg vom Pumpensumpf zur Sprühanordnung nicht durch die genannte Filteranordnung strömt.

Alternativ kann die Filteranordnung bereits am Einlass des zweiten Strömungswegs vorgesehen sein. Verallgemeinert ausgedrückt kann es zweckmäßig sein, wenn der zweite Strömungsweg eine eigene Filteranordnung in Strömungsrichtung (insbesondere aufgezwungen durch sein ihm zugeordnetes Fördermittel) betrachtet vor dem Plattenkondensor aufweist und/oder am Einlass des Plattenkondensors aufweist, bevor die Spülflüssigkeit in die ein oder mehreren Hohlräume des Plattenkondensors hineinströmt.

Gemäß der Erfindung weist die Filteranordnung eine Maschenweite auf, deren Betrag zwischen 2 mm und 8 mm, vorzugsweise zwischen 4 mm und 6 mm, beträgt. Die genannten Werte stellen sicher, dass sich die Filteranordnung nicht allzu schnell mit Verunreinigungen zusetzt und dennoch ein Großteil der Verunreinigungen von der Filteranordnung zurückgehalten wird und damit nicht in den Plattenkondensor gelangt.

Generell kann die Maschenweite auch in Abhängigkeit der Geometrie des Plattenkondensors gewählt werden. Erfindungsgemäß ist es von Vorteil, wenn die Maschenweite der Filteranordnung kleiner ist, als der kleinste Abstand zwischen zwei gegenüberliegenden Seiten der der Spülflotte zugewandten Oberfläche des Plattenkondensors, d.h. als die Querschnittsbreite des jeweiligen, mit zu erwärmender Spülflüssigkeit durchströmten Flüssigkeitsdurchtrittskanals bzw. Hohlraums zwischen je zwei voneinander beabstandeten Platten des Plattenkondensors. Hierdurch wird verhindert, dass sich Verunreinigungen zwischen den genannten Platten einklemmen und dadurch festgesetzt werden.

Das erfindungsgemäße Verfahren zeichnet sich dadurch aus, dass mit Hilfe zumindest eines Mittels der Haushaltsgeschirrspülmaschine ein Festsetzen von Verunreinigungen, die von der Spülflotte mitgeführt werden, an einer der Spülflotte zugewandten Oberfläche des Plattenkondensors verhindert oder erschwert wird und/oder an der Oberfläche festgesetzte Verunreinigungen von der Oberfläche gelöst werden.

Das Mittel kann ausgebildet sein, die Strömungsrichtung der Spülflotte innerhalb des Plattenkondensors zu ändern, beispielsweise durch Änderung der Strömungsgeschwindigkeit oder der Strömungsrichtung. Auch kann eine Erwärmung der Spülflotte vor oder nach dem Eintritt in den Plattenkondensor erfolgen. Denkbar ist auch, dass das Mittel ein Ausfiltern von Verunreinigungen aus der Spülflotte bewirkt, bevor diese in den Plattenkondensor hineintritt.

Selbstverständlich können auch mehrere Mittel vorhanden sein, die das erfindungsgemäße Ziel gemeinsam erreichen. Beispielsweise wäre es denkbar, die Spülflotte mit Hilfe einer Heizeinrichtung zu erwärmen und gleichzeitig oder zeitversetzt auch eine Strömungsumkehr der Spülflotte im Bereich des Plattenkondensors zu bewirken und/oder die Spülflotte zu filtern, bevor sie in den Plattenkondensor eintritt.

Insbesondere ist das Mittel gemäß bisheriger oder nachfolgender Beschreibung ausgebildet.

Vorzugsweise weist die Haushaltsgeschirrspülmaschine ein oder mehrere der vorangegangenen oder nachfolgend beschriebenen Merkmale auf. Zudem weist die Haushaltsgeschirrspülmaschine vorzugsweise eine Steuer- und/oder Regelungseinheit auf, die ausgebildet ist, die Haushaltsgeschirrspülmaschine gemäß einem oder mehreren der beschriebenen Verfahrensmerkmale zu betreiben.

Nach einer vorteilhaften Weiterbildung strömt die Spülflotte auf ihrem Weg vom Pumpensumpf zum Plattenkondensor durch eine Filteranordnung, mit deren Hilfe Verunreinigungen bis zu einer definierten Partikelgröße aus der Spülflotte entfernt werden, bevor diese in den Plattenkondensor strömt. Die Spülflotte wird hierdurch von Verunreinigungen befreit, die größer sind als die Maschenweite der Filtereinrichtung. Bei der Filtereinrichtung kann es sich um eine werkzeuglos austauschbare Filtereinrichtung handeln. Denkbar ist auch der Einsatz einer selbstreinigenden Filtereinrichtung. Beispielsweise wäre es denkbar, dass die Strömung der durch die Filtereinrichtung strömenden Spülflotte zeitweise umgekehrt oder geändert wird, so dass die Filtereinrichtung im Gegenstrom von festhaftenden Verunreinigungen befreit wird.

Gemäß einer vorteilhaften Weiterbildung wird die Spülflotte vor dem Eintreten in den Plattenkondensor und/oder innerhalb des Plattenkondensors zumindest während ausgewählter Programmschritte eines Spülprogramms auf eine Temperatur von wenigstens 60°C erwärmt. Hierdurch lösen sich insbesondere fetthaltige Ablagerungen innerhalb des Plattenkondensors, so dass dessen der Spülflotte zugewandte Oberflächen wieder frei von entsprechenden Ablagerungen werden. Wird die Spülflotte wenigstens einmal pro Spülprogramm auf die genannte Temperatur erwärmt, so kann bereits ein Anhaften der Verunreinigungen verhindert oder zumindest erschwert werden.

Insbesondere ist es von Vorteil, wenn die Erwärmung der Spülflotte während eines Klarspülschritts erfolgt, während dessen die Spülflotte mit einem Klarspülmittel beaufschlagt wird. Ein derartiger Schritt erfolgt zeitlich gesehen nach dem Hauptreinigungsschritt, während dessen die Verunreinigungen von dem Spülgut entfernt werden. Die Erwärmung findet also vorzugsweise dann statt, wenn keine neuen Verunreinigungen mehr vom Spülgut in die Spülflotte gelangen.

Nach einer vorteilhaften Weiterbildung wird die Strömungsrichtung der durch den Plattenkondensor strömenden Spülflotte zumindest zeitweise geändert, vorzugsweise umgekehrt. Beispielsweise könnte die Strömungsrichtung der durch den Plattenkondensor strömenden Spülflotte durch eine Umkehr der Förderrichtung der die Spülflotte in den Plattenkondensor fördernden Fördereinrichtung für einen gewissen Zeitraum während eines Spülprogramms ein- oder mehrmals umgekehrt werden. Auch die Änderung der Förderleistung der Fördereinrichtung ist denkbar, so dass die Spülflotte mit unterschiedlichen Strömungsgeschwindigkeiten durch den Plattenkondensor strömt.

Ein Mittel zum Verhindern oder Verringern des Zusetzens des Plattenkondensors mit Fremdkörpern bzw. Verunreinigungen ist erfindungsgemäß dadurch bereitgestellt sein, dass der Abstand bzw. die Weite des Spalts zwischen denjenigen, jeweils zwei benachbarten Wänden des Plattenkondensors, zwischen denen ein Strömungskanal zum Durchströmen mit zu erwärmender Spülflotte bzw. Spülflüssigkeit bei Betrieb der Wärmepumpenanordnung vorhanden ist, mindestens gleich 4,5 mm gewählt ist. In Verallgemeinerung ist diese für den Durchgang von Spülflotte vorgesehene Spaltweite zwischen je zwei benachbarten Platten des Kondensors etwa gleich oder vorzugsweise größer als die geringste im Durchgangskanal einer die Spülflüssigkeit fördernden Pumpe, insbesondere Umwälzpumpe, auftretende Querschnittsweite gewählt, welche noch eine ausreichende Fremdkörperpassage erlaubt.

Dieselbe Dimensionierung gilt insbesondere auch für den Querabstand zwischen je zwei benachbarten Verbindungsstellen, die zwischen denjenigen, jeweils zwei benachbarten Wänden des Plattenkondensors zu deren Zusammenhalt (quer, insbesondere senkrecht zur jeweiligen Platten- bzw. Wandebene) vorgesehen sind, zwischen denen ein Strömungskanal zum Durchströmen mit zu erwärmender Spülflotte bei Betrieb der Wärmepumpenanordnung vorhanden ist.

Die vorstehend erläuterten und/oder die sonstigen, in den Unteransprüchen wiedergegebenen vorteilhaften Aus- und/oder Weiterbildungen der Erfindung können dabei - außer z.B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen, jeweils in einer schematischen Prinzipskizze:
- **Figur 1**: einen Ausschnitt einer erfindungsgemäßen Haushaltsgeschirrspülmaschine,
- **Figur 2**: einen Ausschnitt einer weiteren erfindungsgemäßen Haushaltsgeschirrspülmaschine,
- **Figur 3**: einen Längsschnitt durch zwei Platten eines Plattenkondensors (oben) sowie eine Draufsicht auf eine der Spülflotte zugewandte Oberfläche einer Platte eines Plattenkondensors (unten), entlang der Spülflüssigkeit in eine vorgegebene Strömungsrichtung zu ihrer Erwärmung strömt, und
- **Figur 4**: die Draufsicht auf die der Spülflotte zugewandte Oberfläche der Platte von Figur 3, entlang der die Spülflüssigkeit im Vergleich zu Figur 3 in umgekehrter Richtung während einer Phase zur Beseitigung von Verunreinigungen strömt.

In den folgenden Figuren sind einander entsprechende Teile mit denselben Bezugszeichen versehen. Dabei sind nur diejenigen Bestandteile einer Haushaltsgeschirrspülmaschine 1 mit Bezugszeichen versehen und erläutert, welche für das Verständnis der Erfindung erforderlich sind. Es versteht sich von selbst, dass die erfindungsgemäße Haushaltsgeschirrspülmaschine 1 weitere Teile und Baugruppen umfassen kann.

Die erfindungsgemäße Haushaltsgeschirrspülmaschine 1 umfasst mehrere Wandungen 16 (in Form von Seitenwandungen, einer Rückwandung, einer Deckenwandung und einer Bodenwandung), die einen innenliegenden Aufnahmeraum 2 begrenzen, der der Aufnahme von Spülgut 3 dient. Die gezeigten Abschnitte sind selbstverständlich von einem nicht gezeigten Gehäuse mit einer Tür umschlossen.

Zur Aufnahme des Spülguts 3 sind im Aufnahmeraum 2 beispielsweise ein oder mehrere Geschirrkörbe 21 vorhanden. Ferner sind ein oder mehrere Sprühanordnungen 7 vorhanden, mit deren Hilfe das Spülgut 3 z. B. während eines Reinigungs- oder Klarspülschritts eines Spülprogramms mit einer Spülflotte 6, d. h. Wasser oder Wasser mit Reinigungs- und/oder Klarspülmittel versetzt, beaufschlagt werden kann. Die Sprühanordnung 7 umfasst im gezeigten Beispiel einen dem oberen Geschirrkorb 21 zugeordneten Abschnitt und einen dem unteren Geschirrkorb 21 zugeordneten Abschnitt. Sie kann insbesondere einen oberen, rotierend gelagerten Sprüharm und einen unteren, rotierend gelagerten Sprüharm aufweisen.

Zur Versorgung mit Frischwasser ist die Haushaltsgeschirrspülmaschine 1 über eine nicht gezeigte Wasserzufuhr mit einem ebenfalls nicht gezeigten Frischwassernetz verbunden. Ebenso ist ein Ablauf 17 vorhanden, über den die Haushaltsgeschirrspülmaschine 1 mit einem nicht gezeigten Abwassernetz in Verbindung steht und über den verschmutzte Spülflotte 6 aus einem im Bereich der Bodenwandung angeordneten Pumpensumpf 4 der Haushaltsgeschirrspülmaschine 1 abgeführt werden kann.

Bevor die Spülflotte 6 jedoch über den Ablauf 17 entsorgt wird, wird sie in der Regel zunächst mehrfach im Kreislauf geführt und über die Sprühanordnung 7 auf das Spülgut 3 aufgebracht, um Verunreinigungen 22 zu lösen. Hierfür umfasst die Haushaltsgeschirrspülmaschine 1 einen ersten Strömungsweg 8, der sich vom Pumpensumpf 4 zu der Sprühanordnung 7 bzw. deren oben genannten Abschnitten erstreckt.

Vorzugsweise umfasst der erste Strömungsweg 8 einen oder mehrere Leitungsabschnitte 12, z. B. in Form von Rohrleitungen. Zwischen einer Fördereinrichtung 10 und den genannten Abschnitten der Sprühanordnung 7 kann sich eine nicht gezeigte Strömungsweiche befinden, über die der Volumenstrom der Spülflotte 6 zu den einzelnen Abschnitten der Sprühanordnung 7 festgelegt ist oder bei einer aktiven Strömungsweiche über eine nicht gezeigte Steuer- und/oder Regelungseinheit geregelt werden kann.

Der erste Strömungsweg 8 beginnt vorzugsweise im Bereich eines ersten Einlasses 13 im Pumpensumpf 4 und erstreckt sich bis zu den Spülflottenaustrittsöffnungen der Sprühanordnung 7. Er umfasst die genannte Fördereinrichtung 10 für die Spülflotte 6.

Weiterhin ist ein zweiter Strömungsweg 9 mit einem Einlass 14 im Pumpensumpf 4 und einem Auslass 15 im Pumpensumpf bzw. Pumpentopf 4 (wie gezeigt) oder im Bereich einer den Aufnahmeraum 2 begrenzenden Wandung 16 vorgesehen (nicht gezeigt). Er weist ein Fördermittel 23 für die Spülflotte 6 auf.

Vorzugsweise handelt es sich bei der Fördereinrichtung 11 und dem Fördermittel 23 um eine Flüssigkeitspumpe, deren Förderleistung mit Hilfe der Steuer- und/oder Regelungseinheit anpassbar ist.

Um die Spülflotte 6 zu erwärmen, umfasst die Haushaltsgeschirrspülmaschine 1 eine Wärmepumpenanordnung mit einem Verdampfer, einem Verdichter, einem Expansionsorgan und einem Verflüssiger in Form eines Plattenkondensors 5, wobei die drei zuerst genannten Bauteile nicht gezeigt sind. Diese können daher an beliebiger Stelle angeordnet sein. Der Verdampfer kann vorzugsweise im Bereich einer Außenseite der genannten Wandungen 16 angeordnet sein. Insbesondere kann er während der ein oder mehreren Teilprogrammschritte mit zu erwärmender Spülflüssigkeit wie z.B. während des Reinigungsschritts oder Klarspülschritts eines durchzuführenden Geschirrspülprogramms z.B. durch mindestens eine thermische Isolationsschicht vom Aufnahmeraum thermisch isoliert angeordnet sein, um Wärmeverluste aus dem Aufnahmeraum während der ein oder mehreren Teilprogrammschritte mit zu erwärmender Spülflüssigkeit wie z.B. während des Reinigungsschritts oder Klarspülschritts weitgehend zu vermeiden. Die thermische Isolierung ist günstiger Weise derart ausgebildet oder wegschaltbar, dass während des Trocknungsschritts des durchzuführenden Geschirrspülprogramms vom Aufnahmeraum auf den Wärmeträger ein Wärmeübergang ermöglicht ist, wenn dieser den Verdampfer passiert. Dies ist insbesondere während des Trocknungsschritts von Vorteil, da hier Wasserdampf im Aufnahmeraum 2 kondensieren soll. Vorzugsweise ist der Verdampfer ein Plattenkondensator.

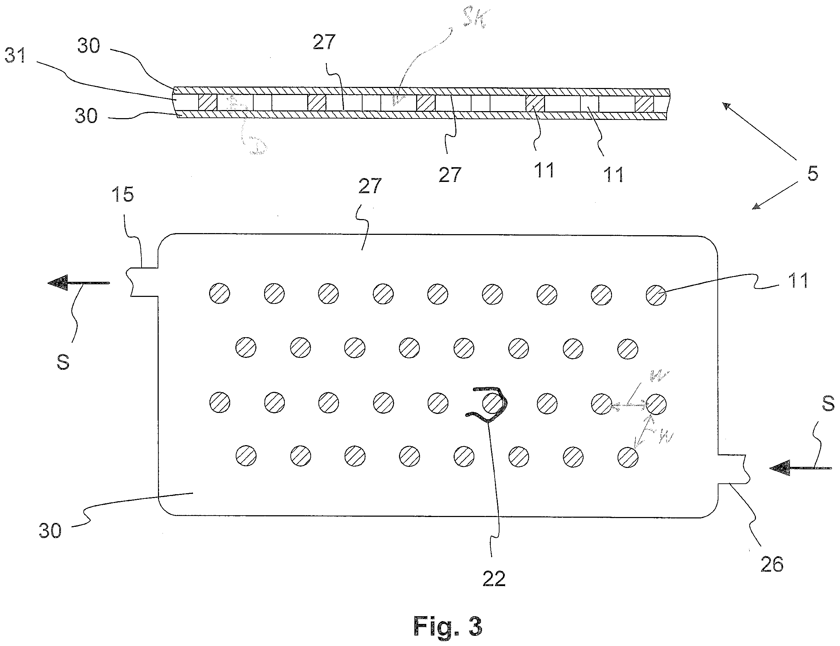

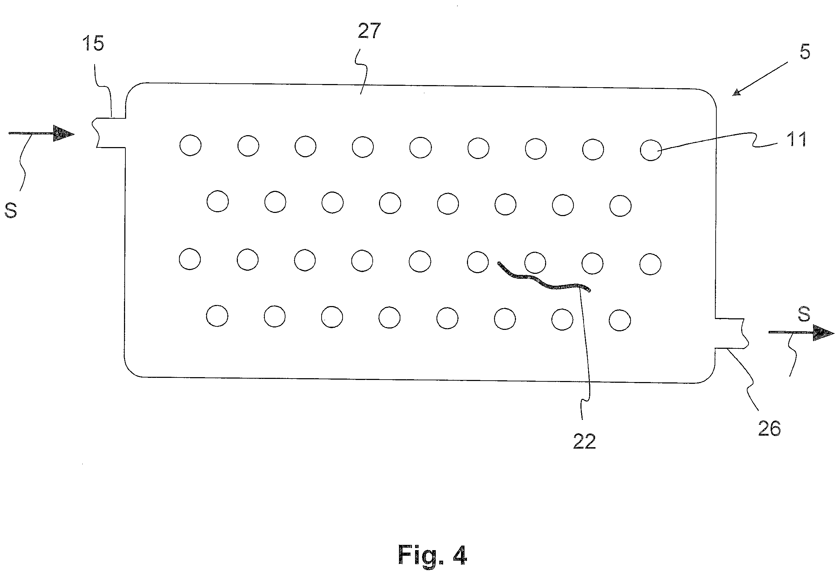

Wird nun der Verdichter aktiviert, so wird der im Bereich des Verdichters gasförmig vorliegende Wärmeträger verdichtet. Der verdichtete Wärmeträger strömt weiter zum Plattenkondensor 5, wo er Wärme abgibt und dabei kondensiert. Der flüssige Wärmeträger gelangt anschließend zum Expansionsorgan, das eine Druckverminderung bewirkt. Im weiteren Verlauf strömt der noch immer oder zumindest teilweise flüssige Wärmeträger zum Verdampfer. Dort entzieht er der Umgebung und/oder einem (hier im Ausführungsbeispiel nicht eingezeichneten) Wassertank, insbesondere Frischwasser-Einlauftank, Wärme und wird hierdurch in den gasförmigen Aggregatszustand überführt, um schließlich wieder zum Verdichter zu gelangen, so dass sich der Wärmeträgerkreislauf schließt. Der Plattenkondensor 5 umfasst eingangsseitig einen Spülflotteneinlass 26 für die aus dem Pumpensumpf 4 zugeführte, zu erwärmende Spülflüssigkeit bzw. Spülflotte und ausgangsseitig einen Spülflottenauslass 15 zur Zurückspeisung der im Plattenkondensor 5 erwärmten Spülflüssigkeit in den Pumpensumpf 4 und/oder an anderer Stelle in den Aufnahmeraum 2. Der Plattenkondensor 5 ist dabei über eine erste Wärmeträgerleitung 18 mit dem Verdichter und über eine zweite Wärmeträgerleitung 19 mit dem Expansionsorgan der Wärmepumpenanordnung verbunden. Die erste Wärmeträgerleitung 18 speist den Wärmeträger in mindestens einen Durchgangskanal mindestens einer Platte des Plattenkondensors ein. Nach Durchlaufen der Vielzahl von Durchgangskanälen der Platten des Plattenkondensors verlässt der Wärmeträger diesen über die zweite Wärmeträgerleitung 19. Spülflotteneinlass 26 und Spülflottenauslass 15 des Plattenkondensors 5 sind in den Figuren 3 und 4 angedeutet.

Im gezeigten Beispiel ist der Plattenkondensor 5 unterhalb der Bodenwandung angeordnet. Selbstverständlich kann dieser auch im Bereich der Deckenwandung oder einer der Seitenwandungen platziert sein.

Um die Spülflotte 6 zum Plattenkondensor 5 zu transportieren, umfasst die Haushaltsgeschirrspülmaschine 1 den zweiten Strömungsweg 9 für die Spülflotte 6, der sich von einem zweiten Einlass 14 im Pumpensumpf 4 zum Plattenkondensor 5 und von dort zu einem Auslass 28 erstreckt.

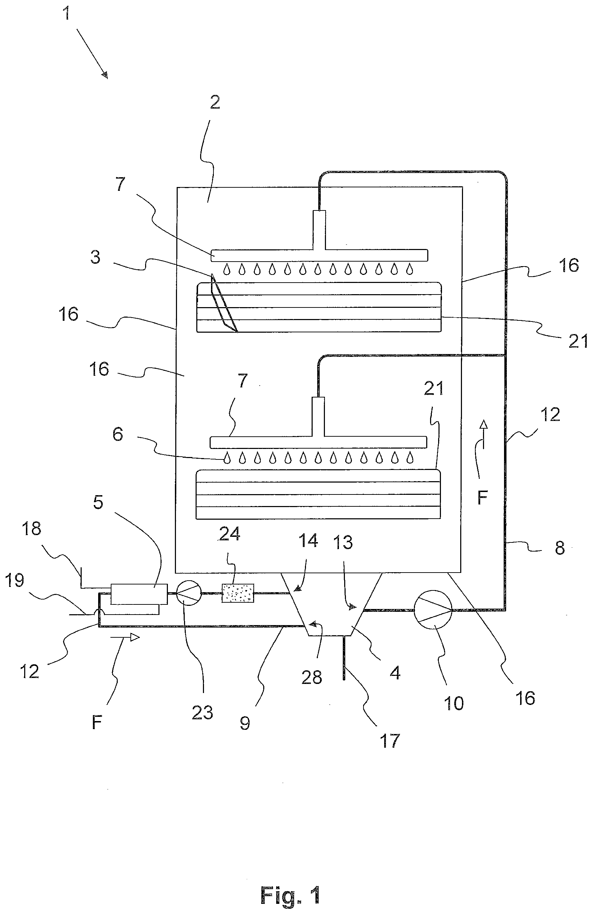

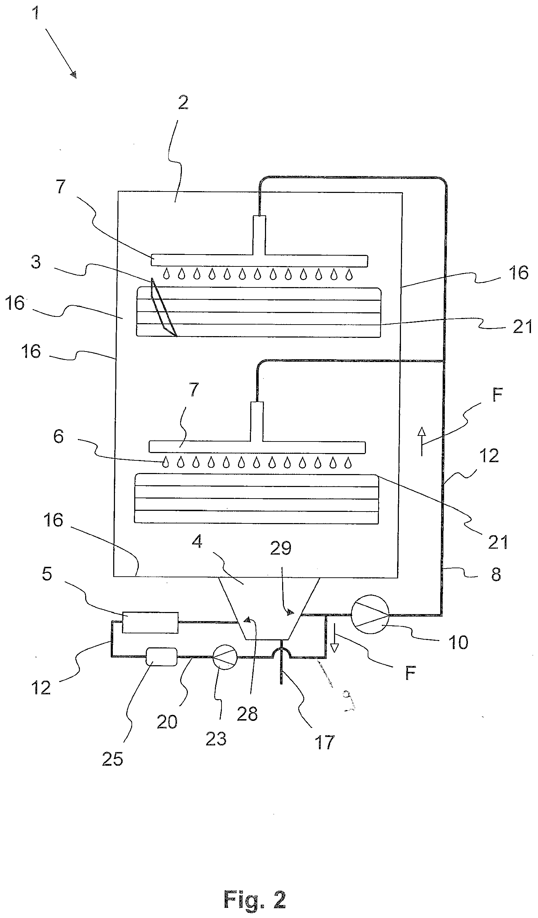

Die Haushaltsgeschirrspülmaschine kann im Pumpensumpf 4 einen ersten Einlass 13 in den ersten Strömungsweg 8 und einen zweiten Einlass 14 in den zweiten Strömungsweg aufweisen (Figur 1). Ebenso ist es denkbar, dass ein gemeinsamer Einlass 29 vorhanden ist (Figur 2), über den die Spülflotte 6 zunächst aus dem Pumpensumpf 4 abgesaugt wird. Die Spülflotte 6 wird schließlich über eine entsprechende, nicht gezeigte Strömungsweiche entweder in den ersten Strömungsweg 8 oder in den zweiten Strömungsweg 9 oder aber anteilig in beide Strömungswege 8, 9 weitergeleitet und gelangt schließlich zu den Sprühanordnungen 7 und/oder zum Plattenkondensor 5.

Die Förderrichtung der Fördereinrichtung 10 bzw. des Fördermittels 23 sind durch einen Pfeil mit dem Bezugszeichen F gekennzeichnet.

Wenn im jeweilig durchzuführenden Spülprogramm ein Spülschritt, wie z.B. ein Reinigungsschritt oder Klarspülschritt, durchgeführt wird, während dem Spülflotte 6 mit Hilfe der Wärmepumpenanordnung erwärmt wird, so wird die Spülflotte 6 im Pumpensumpf 4 mittels der Fördereinrichtung 10 in den zweiten Einlass 14 des zweiten Strömungswegs 9 oder den gemeinsamen Einlass 29 hineingesaugt und zum Plattenkondensor 5 transportiert. Dort wird sie von diesem erwärmt und gelangt durch das Fördermittel 23 über den Auslass 28 des zweiten Strömungswegs 9 zurück in den Pumpensumpf 4.

Um nun zu verhindern, dass in der Spülflotte 6 vorhandene Verunreinigungen 22 sich innerhalb des Plattenkondensors 5 festsetzen oder um zumindest sicherzustellen, dass ein entsprechendes Festsetzen erschwert oder vorhandene Verunreinigungen 22 wieder aus dem Plattenkondensor 5 entfernt werden, umfasst die Haushaltsgeschirrspülmaschine 1 nun wenigstens ein Mittel, mit dem dieses Ziel erreicht werden kann.

In Figur 1 ist eine Lösung gezeigt, bei der in den zweiten Strömungsweg 9 eine Filteranordnung 24 integriert ist, die von der Spülflotte 6 durchflossen wird, bevor diese in den Plattenkondensor 5 gelangt. Die Filteranordnung 24 hat dabei eine Maschenweite, die Partikel bis zu einer bestimmten Partikelgröße zurückhält.

Die Filteranordnung 24 ist vorzugsweise an einer Stelle platziert, die über den Aufnahmeraum 2 oder von der Außenseite der Haushaltsgeschirrspülmaschine 1 zugänglich ist (eventuell nach Lösen einer oder mehrerer Verkleidungen), so dass die Filteranordnung 24 von einem Bediener leicht ausgebaut und gereinigt werden kann. Zusätzlich oder unabhängig hiervon kann die Haushaltsgeschirrspülmaschine 1 ein spezielles Reinigungsprogramm aufweisen, bei dem die Strömungsgeschwindigkeit der die Filteranordnung 24 passierenden Spülflotte 6 erhöht oder umgekehrt wird, um in der Filteranordnung 24 zurückgehaltene Verunreinigungen 22 aus diesem auszuspülen und die Filteranordnung 24 damit zu reinigen.

Die Filtereinrichtung 24 muss nicht in den zweiten Strömungsweg 9 integriert sein. Ebenso ist eine solche auch unmittelbar im Bereich des zweiten Einlasses bzw. Eingangs 14 oder des gemeinsamen Einlasses bzw. Eingangs 29 denkbar. Insbesondere kann die Filteranordnung 24 alternativ bereits am Einlass 14 des zweiten Strömungswegs 9 vorgesehen sein.

Eine weitere Ausführungsform zeigt Figur 2. Hier ist die Filtereinrichtung 24 (nicht in der Figur 2 dargestellt) zusätzlich vorhanden, und ferner eine elektrische Heizung 25 vorgesehen, die die Spülflotte 6 auf eine bestimmte Temperatur erwärmt, bevor sie in den Plattenkondensor 5 eintritt. Die erwärmte Spülflotte 6 bewirkt schließlich ein Lösen von insbesondere fetthaltigen Ablagerungen innerhalb des Plattenkondensors 5.

Vorzugsweise wird die elektrische Heizung 25 nur während ausgewählter Programmabschnitte eines Spülprogramms oder während eines separaten Plattenkondensor-Reinigungsprogramms aktiviert.

Ebenso kann sie während eines herkömmlichen Spülgut-Reinigungsschritts oder eines Klarspülschritts eines Spülprogramms betrieben werden, um die Erwärmung der Spülflotte 6, die hauptsächlich mit Hilfe der Wärmepumpenanordnung erfolgt, zu unterstützen.

Schließlich ist in Figur 3 ein teilweise geschnittener Ausschnitt eines Plattenkondensors 5 gezeigt, wobei die obere Ansicht eine geschnittene Seitenansicht und die untere Ansicht eine geschnittene Draufsicht zeigt. Der Plattenkondensor 5 umfasst, wie aus dem Stand der Technik bekannt, mehrere Platten 30, die in definierten Freiraumabständen geschichtet angeordnet sind. Je zwei voneinander beabstandete, benachbarte Platten stehen über Verbindungsbereiche 11 miteinander in Kontakt stehen und einen Hohlraum 31 für die eingespeiste, zu erwärmende Spülflüssigkeit bilden. Auf der dem jeweiligen Hohlraum 31 abgewandten Seite der ihn begrenzenden ersten und zweiten Platte wird der Wärmeträger der Wärmepumpenanordnung vorzugsweise in einem Kanal oder Hohlraum geführt.

Wird nun Spülflotte 6 über den Spülflotteneinlass 26 in den Plattenkondensor 5 eingebracht, so durchströmt diese den jeweiligen Hohlraum 31. Hierbei kommt sie mit der Spülflotte 6 zugewandten Oberflächen 27 des Plattenkondensors 5 in direktem Kontakt, so dass hier stets die Gefahr besteht, dass Verunreinigungen 22 anhaften oder sich in den Verbindungsbereichen 11 verhängen, wie dies in Figur 3 unten gezeigt ist. Dies führt wiederum zu einer Verschlechterung der Wärmeleitung durch die Platten 30 und damit des Wirkungsgrads des Plattenkondensors 5. Nach Durchströmen aller Hohlräume des Plattenkondensors verlässt die durch diesen erwärmte Spülflüssigkeit den Plattenkondensor 5 wieder über dessen Spülflottenauslass 15.

Vom jeweiligen Hohlraum 31 aus betrachtet wird hinter der den Hohlraum 31 begrenzenden ersten Platte 30 und hinter der von ihr beabstandeten, den Hohlraum begrenzenden zweiten Platte 30 der Wärmeträger der Wärmepumpenanordnung vorbeigeführt und gibt Wärme an die Spülflotte 6 ab, die dann im erwärmten Zustand in den Pumpensumpf 4 und von dort zu den Sprühanordnungen 7 gepumpt wird. Schließlich gelangt sie auf das Spülgut 3 und löst dort Verunreinigungen 22 von diesem ab.

Wie Figur 3 zeigt, können sich insbesondere längere Verunreinigungen 22 an den Verbindungsbereichen 11 festsetzen.

Um diese zu lösen, kann vorgesehen sein, dass die Strömungsrichtung der den Plattenkondensor 5 passierenden Spülflotte 6 in regelmäßigen Zeitabständen umgekehrt wird. Hierdurch werden festgesetzte Verunreinigungen 22 gelöst und aus dem Plattenkondensor 5 ausgetragen. Dies ist schließlich in Figur 4 gezeigt.

Hierfür wird beispielsweise die Förderrichtung des Fördermittels 23 zeitweise umgekehrt.

Ein Mittel zum Verhindern oder Verringern des Zusetzens oder gar Verstopfens des Plattenkondensors mit Fremdkörpern bzw. Verunreinigungen kann zusätzlich oder unabhängig von den vorstehenden Varianten insbesondere dadurch bereitgestellt sein, dass der Abstand bzw. die Weite D des Spalts zwischen denjenigen, jeweils zwei benachbarten Wänden bzw. Platten 30 des Plattenkondensors, zwischen denen ein Strömungskanal SK zum Durchströmen mit zu erwärmender Spülflotte bei Betrieb der Wärmepumpenanordnung vorhanden ist, mindestens gleich 4,5 mm gewählt ist. In Verallgemeinerung ist diese für den Durchgang von Spülflotte vorgesehene Spaltweite zwischen je zwei benachbarten Platten des Kondensors etwa gleich oder vorzugsweise größer als die geringste im Durchgangskanal einer die Spülflüssigkeit fördernden Pumpe wie z.B. 23 oder 10, insbesondere Umwälzpumpe, auftretende Querschnittsweite gewählt, welche noch eine ausreichende Fremdkörperpassage erlaubt.

Dieselbe Dimensionierung gilt insbesondere auch für den Querabstand W zwischen je zwei benachbarten Verbindungsstellen 11, die zwischen denjenigen, jeweils zwei benachbarten Wänden bzw. Platten 30 des Plattenkondensors 5 zu deren Zusammenhalt (quer, insbesondere senkrecht zur jeweiligen Platten- bzw. Wandebene) vorgesehen sind, zwischen denen ein Strömungskanal SKzum Durchströmen mit zu erwärmender Spülflotte bei Betrieb der Wärmepumpenanordnung vorhanden ist.

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

- 1.: Haushaltsgeschirrspülmaschine
- 2.: Aufnahmeraum
- 3.: Spülgut
- 4.: Pumpensumpf
- 5.: Plattenkondensor
- 6.: Spülflotte
- 7.: Sprühanordnung
- 8.: erster Strömungsweg
- 9.: zweiter Strömungsweg
- 10.: Fördereinrichtung
- 11.: Verbindungsbereiche
- 12.: Leitungsabschnitt
- 13.: erster Einlass
- 14.: zweiter Einlass
- 15.: Spülflottenauslass
- 16.: Wandung
- 17.: Ablauf
- 18.: erste Wärmeträgerleitung
- 19.: zweite Wärmeträgerleitung
- 20.: Spülflottenauslass
- 21.: Geschirrkorb
- 22.: Verunreinigung
- 23.: Fördermittel
- 24.: Filteranordnung
- 25.: elektrische Heizung
- 26.: Spülflotteneinlass
- 27.: der Spülflotte zugewandte Oberfläche des Plattenkondensors
- 28.: Auslass
- 29.: gemeinsamer Einlass
- 30.: Platte
- 31.: Hohlraum

- F: Förderrichtung
- S: Strömungsrichtung
- SK: Strömungskanal für zu erwärmende Spülflotte
- D: Abstand zwischen zwei benachbarten Wänden des Plattenkondensors, zwischen denen Strömungskanal für zu erwärmende Spülflotte vorhanden ist
- W: Abstand zwischen je zwei benachbarten Verbindungsstellen 11, die zwischen je zwei benachbarten Wänden des Plattenkondensors vorgesehen sind

## Patentansprüche

1. Haushaltsgeschirrspülmaschine (1) mit einem Aufnahmeraum (2) zur Aufnahme von Spülgut (3), mit einem Pumpensumpf (4), mit einer Wärmepumpenanordnung, die bei ihrem Betrieb von einem Wärmeträger durchströmt wird, wobei die Wärmepumpenanordnung unter anderem einen Verflüssiger in Form eines Plattenkondensors (5) umfasst, mit dessen Hilfe Wärme vom Wärmeträger auf eine in der Haushaltsgeschirrspülmaschine (1) zirkulierende Spülflotte (6) übertragbar ist, und mit wenigstens einer Sprühanordnung (7), mit deren Hilfe Spülflotte (6) auf das Spülgut (3) aufbringbar ist, wobei die Haushaltsgeschirrspülmaschine (1) einen ersten Strömungsweg (8) für die Spülflotte (6) aufweist, der sich vom Pumpensumpf (4) zur Sprühanordnung (7) erstreckt, und wobei die Haushaltsgeschirrspülmaschine (1) einen zweiten Strömungsweg (9) aufweist, der sich vom Pumpensumpf (4) zum Plattenkondensor (5) erstreckt, wobei die Haushaltsgeschirrspülmaschine (1) zumindest ein Mittel aufweist, das ausgebildet ist, ein Festsetzen von Verunreinigungen (22), die von der Spülflotte (6) mitgeführt werden, an einer der Spülflotte (6) zugewandten Oberfläche (27) des Plattenkondensors (5) zu verhindern oder zu erschweren, wobei das Mittel als Filteranordnung (24) ausgebildet ist, **dadurch gekennzeichnet, dass** die Filteranordnung (24) eine Maschenweite aufweist, deren Betrag zwischen 2 mm und 8 mm, vorzugsweise zwischen 4 mm und 6 mm, beträgt, wobei die Maschenweite der Filteranordnung (24) kleiner als der kleinste Abstand zwischen zwei gegenüberliegenden Seiten der der Spülflotte zugewandten Oberfläche (27) des Plattenkondensors (5) ist, und wobei das Mittel dadurch bereitgestellt ist, dass der Abstand (D) zwischen je zwei benachbarten Wänden (27) des Plattenkondensors (5), zwischen denen ein Strömungskanal (SK) zum Durchströmen mit zu erwärmender Spülflotte (6) bei Betrieb der Wärmepumpenanordnung vorhanden ist, mindestens gleich 4,5 mm gewählt ist, und dass der Abstand (W) zwischen je zwei benachbarten Verbindungsstellen (11), die zwischen je zwei benachbarten Wänden (27) des Plattenkondensors (5) vorgesehen sind, zwischen denen ein Strömungskanal (SK) zum Durchströmen mit zu erwärmender Spülflotte (6) bei Betrieb der Wärmepumpenanordnung vorhanden ist, mindestens gleich 4,5 mm gewählt ist.

2. Haushaltsgeschirrspülmaschine (1) gemäß dem vorangegangenen Anspruch, **dadurch gekennzeichnet, dass** das Mittel als Fördermittel (23), vorzugsweise als Pumpe, ausgebildet ist, mit dessen Hilfe die Strömungsgeschwindigkeit der durch den Plattenkondensor (5) strömenden Spülflotte (6) zeitweise erhöht oder erniedrigt und/oder die Strömungsrichtung der durch den Plattenkondensor (5) strömenden Spülflotte (6) veränderbar, vorzugsweise umkehrbar, ist.

3. Haushaltsgeschirrspülmaschine (1) gemäß dem vorangegangenen Anspruch, **dadurch gekennzeichnet, dass** das Fördermittel (23) in den zweiten Strömungsweg (9) integriert ist.

4. Haushaltsgeschirrspülmaschine (1) gemäß mindestens einem der vorhergehenden Ansprüche, **dadurch gekennzeichnet, dass** das Mittel als Bypass ausgebildet ist, mit dessen Hilfe sich der Strömungsweg der in den Plattenkondensor (5) einströmenden Spülflotte (6) ändern lässt.

5. Haushaltsgeschirrspülmaschine (1) gemäß mindestens einem der vorhergehenden Ansprüche, **dadurch gekennzeichnet, dass** das Mittel als Heizeinrichtung ausgebildet ist, mit deren Hilfe sich die in den Plattenkondensor (5) einströmende Spülflotte (6) vor dem Eintreten in den Plattenkondensor (5) oder innerhalb des Plattenkondensors (5) auf eine Temperatur von wenigstens 60° C erwärmen lässt.

6. Haushaltsgeschirrspülmaschine (1) gemäß dem vorangegangenen Anspruch, **dadurch gekennzeichnet, dass** die Heizeinrichtung als elektrische Heizung (25) ausgebildet ist.

7. Haushaltsgeschirrspülmaschine (1) gemäß Anspruch 5, **dadurch gekennzeichnet, dass** die Heizeinrichtung durch den Plattenkondensor (5) gebildet ist.

8. Haushaltsgeschirrspülmaschine (1) gemäß mindestens einem der vorhergehenden Ansprüche, **dadurch gekennzeichnet, dass** die Filteranordnung (24) in den zweiten Strömungsweg (9) integriert ist, insbesondere am Einlass (26) des Plattenkondensors (5) vorgesehen ist, und/oder den Einlass (14) des zweiten Strömungswegs (9) abdeckt.

9. Verfahren zum Betreiben einer Haushaltsgeschirrspülmaschine (1) mit einem Aufnahmeraum (2) zur Aufnahme von Spülgut (3), mit einem Pumpensumpf (4), mit einer Wärmepumpenanordnung, die bei ihrem Betrieb von einem Wärmeträger durchströmt wird, wobei die Wärmepumpenanordnung unter anderem einen Verflüssiger in Form eines Plattenkondensors (5) umfasst, mit dessen Hilfe beim Betrieb der Wärmepumpenanordnung Wärme vom Wärmeträger auf eine in der Haushaltsgeschirrspülmaschine (1) zirkulierende Spülflotte (6) übertragen wird und mit wenigstens einer Sprühanordnung (7), mit deren Hilfe Spülflotte (6) während eines Spülprogramms auf das Spülgut (3) aufgebracht wird, wobei mit Hilfe zumindest eines Mittels der Haushaltsgeschirrspülmaschine (1) ein Festsetzen von Verunreinigungen (22), die von der Spülflotte (6) mitgeführt werden, an einer der Spülflotte (6) zugewandten Oberfläche (27) des Plattenkondensors (5) verhindert oder erschwert wird, wobei das Mittel als Filteranordnung (24) ausgebildet ist, **dadurch gekennzeichnet, dass** die Filteranordnung (24) eine Maschenweite aufweist, deren Betrag zwischen 2 mm und 8 mm, vorzugsweise zwischen 4 mm und 6 mm, beträgt, wobei die Maschenweite der Filteranordnung (24) kleiner als der kleinste Abstand zwischen zwei gegenüberliegenden Seiten der der Spülflotte zugewandten Oberfläche (27) des Plattenkondensors (5) ist, und wobei das Mittel dadurch bereitgestellt ist, dass der Abstand (D) zwischen je zwei benachbarten Wänden (27) des Plattenkondensors (5), zwischen denen ein Strömungskanal (SK) zum Durchströmen mit zu erwärmender Spülflotte (6) bei Betrieb der Wärmepumpenanordnung vorhanden ist, mindestens gleich 4,5 mm gewählt ist, und dass der Abstand (W) zwischen je zwei benachbarten Verbindungsstellen (11), die zwischen je zwei benachbarten Wänden (27) des Plattenkondensors (5) vorgesehen sind, zwischen denen ein Strömungskanal (SK) zum Durchströmen mit zu erwärmender Spülflotte (6) bei Betrieb der Wärmepumpenanordnung vorhanden ist, mindestens gleich 4,5 mm gewählt ist.

10. Verfahren gemäß dem vorangegangenen Anspruch, **dadurch gekennzeichnet, dass** die Spülflotte (6) auf ihrem Weg vom Pumpensumpf (4) zum Plattenkondensor (5) durch eine Filteranordnung (24) strömt, mit deren Hilfe Verunreinigungen (22) bis zu einer definierten Partikelgröße aus der Spülflotte (6) entfernt werden, bevor diese in den Plattenkondensor (5) strömt.

11. Verfahren gemäß einem der Ansprüche 9 oder 10, **dadurch gekennzeichnet, dass** die Spülflotte (6) vor dem Eintreten in den Plattenkondensor (5) und/oder innerhalb des Plattenkondensors (5) zumindest während ausgewählter Programmschritte eines Spülprogramms auf eine Temperatur von wenigstens 60° C erwärmt wird.

12. Verfahren gemäß dem vorangegangenen Anspruch, **dadurch gekennzeichnet, dass** die Erwärmung der Spülflotte (6) während eines Klarspülschritts erfolgt, während dessen die Spülflotte (6) mit einem Klarspülmittel beaufschlagt wird.

13. Verfahren gemäß einem der Ansprüche 9 bis 12, **dadurch gekennzeichnet, dass** die Strömungsrichtung der durch den Plattenkondensor (5) strömenden Spülflotte (6) zumindest zeitweise geändert, vorzugsweise umgekehrt, wird, und/oder das die Strömungsgeschwindigkeit der durch den Plattenkondensor (5) strömenden Spülflotte (6) variiert wird.

## Claims

1. Household dishwasher (1) with a receiving compartment (2) for receiving items to be washed (3), having a pump sump (4), a heat pump assembly through which, during operation, a heat transfer medium flows, wherein the heat pump assembly comprises inter alia a condenser in the form of a plate condenser (5) which can be used to transfer heat from the heat transfer medium to a washing liquor (6) circulating in the household dishwasher (1), and at least one spray assembly (7) which can be used to supply washing liquor (6) to the items to be washed (3), wherein the household dishwasher (1) has a first flow path (8) for the washing liquor (6) extending from the pump sump (4) to the spray assembly (7), and wherein the household dishwasher (1) has a second flow path (9) extending from the pump sump (4) to the plate condenser (5), wherein the household dishwasher (1) has at least one means which is embodied to prevent or hinder foreign matter (22) that is swept along with the washing liquor (6) from adhering to a surface (27) of the plate condenser (5) facing the washing liquor (6), wherein the means is embodied as a filter assembly (24), **characterised in that** the filter assembly (24) has a mesh size, the sum of which amounts to between 2 mm and 8 mm, preferably between 4 mm and 6 mm, wherein the mesh size of the filter assembly (24) is smaller than the smallest distance between two opposing sides of the surface (27) of the plate condenser (5) facing the washing liquor (6),
and wherein the means is provided by the distance (D) between each two adjacent walls (27) of the plate condenser (5), between which a flow channel (SK) for the flow-through of washing liquor (6) to be heated is present during operation of the heat pump assembly, being selected to be at least equal to 4.5 mm, and by the distance (W) between each two adjacent connecting points (11), which are provided between each two adjacent walls (27) of the plate condenser (5), between which a flow channel (SK) for the flow-through of washing liquor (6) to be heated is present during operation of the heat pump assembly, being selected to be at least equal to 4.5 mm.

2. Household dishwasher (1) according to the preceding claim, **characterised in that** the means is embodied as a conveying means (23), preferably as a pump, with the aid of which the flow speed of the washing liquor (6) flowing through the plate condenser (5) is temporarily increased or reduced and/or the flow direction of the washing liquor (6) flowing through the plate condenser (5) can be changed, preferably reversed.

3. Household dishwasher (1) according to the preceding claim, **characterised in that** the conveying means (23) is integrated into the second flow path (9).

4. Household dishwasher (1) according to at least one of the preceding claims, **characterised in that** the means is embodied as a bypass, with the aid of which the flow path of the washing liquor (6) flowing into the plate condenser (5) can be changed.

5. Household dishwasher (1) according to at least one of the preceding claims, **characterised in that** the means is embodied as a heating device, with the aid of which the washing liquor (6) flowing into the plate condenser (5) can be heated before entering the plate condenser (5) or within the plate condenser (5) to a temperature of at least 60°C.

6. Household dishwasher (1) according to the preceding claim, **characterised in that** the heating device is embodied as an electrical heater (25).

7. Household dishwasher (1) according to claim 5, **characterised in that** the heating device is formed by the plate condenser (5).

8. Household dishwasher (1) according to at least one of the preceding claims, **characterised in that** the filter assembly (24) is integrated into the second flow path (9), in particular is provided at the inlet (26) of the plate condenser (5), and/or covers the inlet (14) of the second flow path (9).

9. Method for operating a household dishwasher (1) having a receiving compartment (2) for receiving items to be washed (3), a pump sump (4), a heat pump assembly through which, during operation, a heat transfer medium flows, wherein the heat pump assembly comprises inter alia a condenser in the form of a plate condenser (5) which is used during operation of the heat pump assembly to transfer heat from the heat transfer medium to a washing liquor (6) circulating in the household dishwasher (1), and at least one spray assembly (7) which is used during a washing program to supply washing liquor (6) to the items to be washed (3), wherein using at least one means of the household dishwasher (1) foreign matter (22) that is swept along with the washing liquor (6) is prevented or hindered from adhering to a surface (27) of the plate condenser (5) facing the washing liquor (6), wherein the means is embodied as a filter assembly (24), **characterised in that** the filter assembly (24) has a mesh size, the sum of which amounts to between 2 mm and 8 mm, preferably between 4 mm and 6 mm, wherein the mesh size of the filter assembly (24) is smaller than the smallest distance between two opposing sides of the surface (27) of the plate condenser (5) facing the washing liquor, and wherein the means is provided by the distance (D) between each two adjacent walls (27) of the plate condenser (5), between which a flow channel (SK) for the flow-through of washing liquor (6) to be heated is present during operation of the heat pump assembly, being selected to be at least equal to 4.5 mm, and by the distance (W) between each two adjacent connecting points (11), which are provided between each two adjacent walls (27) of the plate condenser (5), between which a flow channel (SK) for the flow-through of washing liquor (6) to be heated is present during operation of the heat pump assembly, being selected to be at least equal to 4.5 mm.

10. Method according to the preceding claim, **characterised in that** the washing liquor (6) conveyed from the pump sump (4) to the plate condenser (5) flows through a filter assembly (24), which serves to remove foreign matter (22) up to a defined particle size from the washing liquor (6) before it flows into the plate condenser (5).

11. Method according to one of claims 9 or 10, **characterised in that** the washing liquor (6) is heated to a temperature of at least 60°C before entering the plate condenser (5) and/or within the plate condenser (5) at least during selected program steps of a washing program.

12. Method according to the preceding claim, **characterised in that** the heating of the washing liquor (6) takes place during a rinsing step, during which a rinse aid is supplied to the washing liquor (6).

13. Method according to one of claims 9 to 12, **characterised in that** the flow direction of the washing liquor (6) flowing through the plate condenser (5) is changed, preferably reversed, at least temporarily, and/or that the flow speed of the washing liquor (6) flowing through the plate condenser (5) is varied.

## Revendications

1. Lave-vaisselle (1) à usage domestique, comprenant un espace de logement (2) destiné à loger des produits à laver (3), comprenant un puisard (4), comprenant un agencement de pompe de chaleur qui est traversé par un fluide caloporteur pendant son fonctionnement, dans lequel l'agencement de pompe de chaleur comprend entre autres un condenseur sous forme d'un condenseur à plaques (5) à l'aide duquel la chaleur du fluide caloporteur est transmissible à une flotte de lavage (6) circulant dans le lave-vaisselle (1) à usage domestique, et comprenant au moins un agencement d'arrosage (7) à l'aide duquel la flotte de lavage (6) peut être amenée sur les produits à laver (3), dans lequel le lave-vaisselle (1) à usage domestique présente un premier trajet d'écoulement (8) pour la flotte de lavage (6), lequel s'étend du puisard (4) vers l'agencement d'arrosage (7), et dans lequel le lave-vaisselle (1) à usage domestique présente un deuxième trajet d'écoulement (9) qui s'étend du puisard (4) vers le condenseur à plaques (5), dans lequel le lave-vaisselle (1) à usage domestique présente au moins un moyen qui est réalisé pour empêcher ou entraver un dépôt d'impuretés (22), qui sont transportées par la flotte de lavage (6), sur une surface (27) du condenseur à plaques (5), orientée vers la flotte de lavage (6), dans lequel le moyen est réalisé comme agencement de filtrage (24), **caractérisé en ce que** l'agencement de filtrage (24) présente une largeur de maille dont la valeur est comprise entre 2 mm et 8 mm, de préférence entre 4 mm et 6 mm, dans lequel la largeur de maille de l'agencement de filtrage (24) est plus petite que le plus petit écart entre deux côtés opposés de la surface (27) du condenseur à plaques, orientée vers la flotte de lavage, et dans lequel le moyen est fourni du fait que l'écart (D) entre respectivement deux parois adjacentes (27) du condenseur à plaques (5), entre lesquelles un canal d'écoulement (SK) pour le passage avec de la flotte de lavage (6) à échauffer pendant le fonctionnement de l'agencement de pompe de chaleur est présent, est sélectionné au moins de manière égale à 4,5mm, et que l'écart (W) entre respectivement deux points de jonction adjacents (11) qui sont ménagés entre respectivement deux parois adjacentes (27) du condenseur à plaques (5), entre lesquelles un canal d'écoulement (SK) pour le passage avec de la flotte de lavage (6) à échauffer pendant le fonctionnement de l'agencement de pompe de chaleur est présent, est sélectionné au moins de manière égale à 4,5 mm.

2. Lave-vaisselle (1) à usage domestique selon la revendication précédente, **caractérisé en ce que** le moyen est réalisé comme moyen de transport (23), de préférence comme pompe, à l'aide duquel la vitesse d'écoulement de la flotte de lavage (6) s'écoulant à travers le condenseur à plaques (5) est temporairement augmentée ou diminuée et/ou le sens d'écoulement de la flotte de lavage (6) s'écoulant à travers le condenseur à plaques (5) est modifiable, de préférence réversible.

3. Lave-vaisselle (1) à usage domestique selon la revendication précédente, **caractérisé en ce que** le moyen de transport (23) est intégré dans le deuxième trajet d'écoulement (9).

4. Lave-vaisselle (1) à usage domestique selon au moins l'une quelconque des revendications précédentes, **caractérisé en ce que** le moyen est réalisé comme bypass à l'aide duquel le trajet d'écoulement de la flotte de lavage (6) affluant dans le condenseur à plaques (5) peut être modifié.

5. Lave-vaisselle (1) à usage domestique selon au moins l'une quelconque des revendications précédentes, **caractérisé en ce que** le moyen est réalisé comme dispositif de chauffage à l'aide duquel la flotte de lavage (6) affluant dans le condenseur à plaques (5) peut être échauffée à une température d'au moins 60° C avant l'entrée dans le condenseur à plaques (5) ou à l'intérieur du condenseur à plaques (5).

6. Lave-vaisselle (1) à usage domestique selon la revendication précédente, **caractérisé en ce que** le dispositif de chauffage est réalisé comme chauffage électrique (25).

7. Lave-vaisselle (1) à usage domestique selon la revendication 5, **caractérisé en ce que** le dispositif de chauffage est formé par le condenseur à plaques (5).

8. Lave-vaisselle (1) à usage domestique selon au moins l'une quelconque des revendications précédentes, **caractérisé en ce que** l'agencement de filtrage (24) est intégré dans le deuxième trajet d'écoulement (9), notamment à l'entrée (26) du condenseur à plaques (5), et/ou recouvre l'entrée (14) du deuxième trajet d'écoulement (9).

9. Procédé de fonctionnement d'un lave-vaisselle (1) à usage domestique, comprenant un espace de logement (2) destiné à loger des produits à laver (3), comprenant un puisard (4), comprenant un agencement de pompe de chaleur qui est traversé par un fluide caloporteur pendant son fonctionnement, dans lequel l'agencement de pompe de chaleur comprend entre autres un condenseur sous forme d'un condenseur à plaques (5) à l'aide duquel la chaleur du fluide caloporteur est transmise à une flotte de lavage (6) circulant dans le lave-vaisselle (1) à usage domestique pendant le fonctionnement de l'agencement de pompe de chaleur, et comprenant au moins un agencement d'arrosage (7) à l'aide duquel la flotte de lavage (6) est amenée sur les produits à laver (3) pendant un programme de lavage, dans lequel un dépôt d'impuretés (22), qui sont transportées par la flotte de lavage (6), est empêché ou entravé sur une surface (27) du condenseur à plaques (5), orientée vers la flotte de lavage (6), à l'aide d'au moins un moyen du lave-vaisselle (1) à usage domestique, dans lequel le moyen est réalisé comme agencement de filtrage (24), **caractérisé en ce que** l'agencement de filtrage (24) présente une largeur de maille dont la valeur est comprise entre 2 mm et 8 mm, de préférence entre 4 mm et 6 mm, dans lequel la largeur de maille de l'agencement de filtrage (24) est plus petite que le plus petit écart entre deux côtés opposés de la surface (27) du condenseur à plaques, orientée vers la flotte de lavage, et dans lequel le moyen est fourni du fait que l'écart (D) entre respectivement deux parois adjacentes (27) du condenseur à plaques (5), entre lesquelles un canal d'écoulement (SK) pour le passage avec de la flotte de lavage (6) à échauffer pendant le fonctionnement de l'agencement de pompe de chaleur est présent, est sélectionné au moins de manière égale à 4,5mm, et que l'écart (W) entre respectivement deux points de jonction adjacents (11) qui sont ménagés entre respectivement deux parois adjacentes (27) du condenseur à plaques (5), entre lesquelles un canal d'écoulement (SK) pour le passage avec de la flotte de lavage (6) à échauffer pendant le fonctionnement de l'agencement de pompe de chaleur est présent, est sélectionné au moins de manière égale à 4,5 mm.

10. Procédé selon la revendication précédente, **caractérisé en ce que** la flotte de lavage (6), sur son trajet du puisard (4) vers le condenseur à plaques (5), traverse un agencement de filtrage (24) à l'aide duquel les impuretés (22) ayant jusqu'à une taille de particule définie sont retirées de la flotte de lavage (6) avant que celles-ci n'affluent dans le condenseur à plaques (5).

11. Procédé selon l'une quelconque des revendications 9 ou 10, **caractérisé en ce que** la flotte de lavage (6), avant d'entrer dans le condenseur à plaques (5) et/ou à l'intérieur du condenseur à plaques (5), est échauffée à une température d'au moins 60° C au moins pendant des étapes de programme sélectionnées du programme de lavage.

12. Procédé selon la revendication précédente, **caractérisé en ce que** réchauffement de la flotte de lavage (6) est réalisé pendant une étape de rinçage, pendant laquelle la flotte de lavage (6) reçoit un produit de rinçage.

13. Procédé selon l'une quelconque des revendications 9 à 12, **caractérisé en ce que** le sens d'écoulement de la flotte de lavage (6) traversant le condenseur à plaques (5) est modifié au moins temporairement, de préférence inversé, et/ou **en ce que** la vitesse d'écoulement de la flotte de lavage (6) traversant le condenseur à plaques (5) est variée.
